# EUROPÄISCHE PATENTSCHRIFT

(11) **EP 1 364 193 B1**
(45) Veröffentlichungstag und Bekanntmachung des Hinweises auf die Patenterteilung: **27.09.2006**
(21) Anmeldenummer: 02744897.6
(22) Anmeldetag: 23.02.2002
(51) Int. Cl.: G01L 9/00, G07C 3/00, G01M 5/00, G01K 1/02, F16L 41/00, H04Q 9/00

(54) **VORRICHTUNG ZUM MESSEN IN ODER AN SCHLAUCHLEITUNGEN**
DEVICE FOR MEASURING IN OR ON FLEXIBLE HOSE-TYPE PIPES
DISPOSITIF POUR MESURER DANS OU SUR DES LIGNES DE TUYAUX

(30) Priorität: 28.02.2001 DE 20103434 U
(43) Veröffentlichungstag der Anmeldung: 26.11.2003
(73) Patentinhaber: Dipl.-Ing. K. Dietzel GmbH, 04626 Beerwalde (DE)
(72) Erfinder: DIETZEL, Klaus, 04626 Beerwalde (DE)
(74) Vertreter: König, Gregor Sebastian
(86) Internationale Anmeldenummer: PCT/EP2002/001921
(87) Internationale Veröffentlichungsnummer: WO 2002/069666

(56) Entgegenhaltungen:
- EP-A- 0 185 650
- WO-A-00/50866
- GB-A- 2 296 568

## Beschreibung

Die Erfindung betrifft eine Vorrichtung zum Messen von Drücken, Temperaturen, Impulsen, Dehnungen und anderen Werten in und an Schlauchleitungen während des Betriebes. Dies vor allem bei Schlauchleitungen, die hohen Beanspruchungen der verschiedensten Art ausgesetzt sind und/oder deren unerwarteter Ausfall schwerwiegende Folgen haben kann und nimmt die Priorität des deutschen Gebrauchsmusters 201 03 434.4 in Anspruch, auf das inhaltlich Bezug genommen wird.

Zur Zeit sind keine kostengünstigen und in großer Zahl in der Praxis einsetzbare Vorrichtungen bekannt, mit denen sich die Beanspruchung von Schlauchleitungen während des Betriebes messen, auswerten und aufzeichnen lassen. Man kennt also die verschiedenen Beanspruchungen, insbesondere in schwer zugänglichen und gefährlichen Bereichen nicht wirklich, denen eine solche Schlauchleitung im Laufe ihrer Betriebszeit ausgesetzt ist. Folglich lässt sich nur vermuten, wann eine Schlauchleitung überaltert oder überlastet ist und ausgewechselt werden muss, was dann häufig entweder mit oft schwerwiegenden Folgen zu spät oder in unwirtschaftlicher Weise zu früh und deshalb unnötig geschieht.

Aus WO 00/50 866 A1 ist es jedoch bekannt, bei einer Vorrichtung zum Messen von Drücken, Temperaturen, Impulsen, Dehnungen und anderen Werten an Schlauchleitungen eine Messeinheit in oder an der Wandung der Schlauchleitung vorzusehen, die mit der Wandung verbunden ist und mindestens einen Sensor für jeden Messwert, einen Transponder und eine Antenne zum drucklosen Datenübertragen zu einer externen Auswerteeinheit besitzt.

Der Erfindung liegt deshalb das Problem zugrunde, eine Vorrichtung zum Messen von Werten in und an Schlauchleitungen während des Betriebes zu schaffen, die sich kostengünstig herstellen und sich in den meisten Schlauchleitungen einsetzen lässt.

Dieses Problem wird erfindungsgemäß dadurch gelöst, dass die Schlauchleitung mindestens eine Messeinheit besitzt, die mindestens einen Sensor für jeden zu messenden Wert, einen Transponder und eine Antenne zum drahtlosen Datenübertragen zu einer externen Auswerteinheit aufweist. Als zu messende Werte kommen vor allem jene in Frage, welche die Lebensdauer der Schlauchleitung beeinflussen. Das sind zunächst der Druck und die Temperatur des Mediums, das sich in der Schlauchleitung befindet und dessen Wandung belastet. Oft belastet das Medium die Schlauchleitung auch mit Impulsen, deren Höhe und Frequenz maßgeblich für die Größe der Beanspruchung der Schlauchleitung ist. Durch solche und andere Beanspruchungen gibt die Wandung der Schlauchleitung im Laufe der Zeit nach, so dass Dehnungen bis hin zu Ausbeulungen auftreten, die ebenfalls festgestellt werden sollten.

Die Sensor ist in der Schlaucharmatur angeordnet. Hier sind die Messergebnisse frei von Störungen durch Schlauchbewegungen, vor allem bei druckbelastetem Schlauch. Die einzelnen Messorte in der Armatur können variieren und sind von der Konstruktion der jeweiligen Armatur abhängig. Der übliche Armaturenstahl weist im elastischen Bereich einen linearen Verlauf der Spannungs-Dehnungs-Beziehung auf. Dies vereinfacht die Auswertung der Dehnungsmessung erheblich. Das bekannte Temperatur-Dehnungsverhalten des Armaturenstahls ermöglicht zudem bei gleichzeitiger Temperaturerfassung ein sehr genaues Messen der druckabhängigen Dehnung. Der hohe Wärmeleitwert des Stahls, im Vergleich zum Schlauchgummi, ermöglicht eine genaue Bestimmung der Mediumstemperatur.

Die Messeinrichtung nach der Erfindung erlaubt es, solche Beanspruchungen sowie deren Häufigkeit und Stärke zu ermitteln. Kennt man diese, dann lässt sich die Alterung der Schlauchleitung einschätzen und ein Zeitpunkt festlegen, an dem in wirtschaftlicher Weise, aber auch rechtzeitig vor einem Platzen der Schlauchleitung, ein Austausch erforderlich ist. Dabei lassen sich die Beanspruchungen wegen der drahtlosen Datenübertragung selbst in engen, schwer zugänglichen oder gefährlichen Bereichen feststellen sowie an solchen Schlauchleitungen, die während des Betriebes ihren Standort verändern. Die Auswerteinheit kann mobil oder stationär sein. Ihre Aufzeichnungen ermöglichen ferner eine spätere Ursachenforschung hinsichtlich vieler Ereignisse, die sich nicht nur im Bereich der Schlauchleitung, sondern auch an anderen Stellen der Anlage ereignet haben.

Die Meßeinheit und ihre Einzelteile besitzen so geringe Abmessungen, daß sie durchaus innerhalb der Wandung einer Schlauchleitung, beispielsweise durch Einvulkanisieren, angeordnet sein kann. Außerdem erlauben die geringen Abmessungen der Meßeinheit eine Anordnung auf der Außenfläche der Schlauchleitung, wo sie sich zum Beispiel durch eine aufgeschobene Hülse schützen läßt. Die zu messenden und festzustellenden Drücke, Temperaturen, Impulse und Dehnungen übertragen sich proportional zur Außenfläche der Schlauchleitung hin und lassen sich deshalb auch dort abnehmen.

Vorteilhaft ist es, wenn der Transponder als Smarttransponder ausgebildet ist. Dann werden die vom Sensor oder von den Sensoren gelieferten Meßdaten bis zur Ausgabe an die externe Auswerteinheit nicht nur im Transponder abgespeichert und in der abgespeicherten Form ausgegeben, sondern die Meßdaten können dann schon vor ihrer Ausgabe im Transponder bearbeitet bzw. ausgewertet werden. Der Speicher eines solchen Transponders ermöglicht es auch, zuverlässige und längerfristige Auskünfte über die betreffende Schlauchleitung auf preiswerte Art zu erlangen.

Noch günstiger ist es, wenn die Meßeinheit einen besonderen Datenspeicher besitzt. Es lassen sich mit ihm dann noch mehr Meßdaten speichern, so daß eine größere Anzahl von Sensoren eingesetzt werden kann. Auch lassen sich dann die Meßdaten in größeren Zeitabständen von der Auswerteinheit entnehmen.

Ferner kann die Meßeinheit mit mindestens einer Batterie oder einem Akkumulator ausgerüstet sein. Eine solche Stromquelle ermöglicht eine höhere Leistung der gesamten Vorrichtung, insbesondere aber des Transponders. Auch ein größerer Abstand zwischen der Meß- und der Auswerteinheit ist dann möglich.

Darüber hinaus läßt sich die Meßeinheit auch mit einem Meßwandler ausstatten. Ein solcher Meßwandler formt die von dem oder den Sensoren kommenden Signale so um, daß sie direkt entweder in dem Speicher des Transponders oder in dem besonderen Datenspeicher abgelegt werden können.

Die Erfindung wird im folgenden anhand eines in der Zeichnung dargestellten Ausführungsbeispieles des näheren erläutert. In der Zeichnung zeigen:
- Fig. 1: eine Schlauchleitung mit Meßeinrichtung, teilweise im Längsschnitt;
- Fig. 2: eine Einzelheit "A" von Figur 1 schematisch und in größerem Maßstab;
- Fig. 3: eine Einzelheit bei "B" von Figur 2 ebenfalls schematisch und in nochmals größerem Maßstab;
- Fig. 4: eine Schlauchleitung mit einem in der Schlaucharmatur angeordneten Sensor.

Eine Schlauchleitung 1 besitzt an ihren beiden Endabschnitten jeweils eine Armatur 2, 2a, die mittels einer Fassung 3 mechanisch fest und nach außen druckmitteldicht mit einem Hydraulikschlauch 4 fest verkrimpt ist. An einer beliebigen Stelle zwischen den beiden Fassungen 3 ist auf der mit 5 bezeichneten Außenfläche des Hydraulikschlauches 4 eine Meßeinheit 6 angeordnet und fest, beispielsweise durch Kleben, mit der Außenfläche 5 verbunden. Eine über die Meßeinheit 6 geschobene Hülse 7 schützt diese.

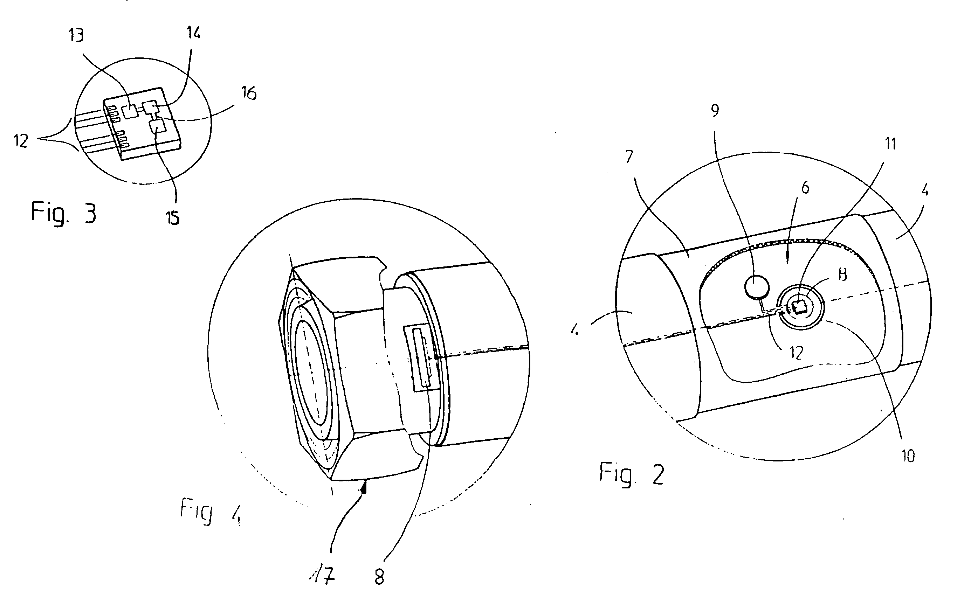

Die in Fig. 2 deutlich dargestellte Meßeinheit 6 besitzt einen Sensor 8 beispielsweise zur Druckmessung. Es können aber auch mehrere Sensoren und solche zur Messung anderer Werte vorgesehen sein. Eine Batterie oder ein Akkumulator 9 versorgt die Meßeinheit mit Strom. Außerdem ist eine kreisförmige Antenne 10 zum Abstrahlen von Meßdaten zu einer nicht dargestellten externen Auswerteinheit vorhanden. Im Zentrum der Meßeinheit 6 befindet sich eine kleine Platine 11, zu der Anschlußleitungen 12 von dem Sensor 8, der Batterie 9 und der Antenne 10 geführt sind.

Fig. 3 zeigt die Platine 11 mit den Anschlußleitungen 12. Auf der Platine 11 sind ein Smarttransponder 13, ein Datenspeicher 14 und ein Meßwandler 15 angeordnet und in der erforderlichen Weise über nur schematisch angedeutete Leiterbahnen 16 miteinander verbunden. Der Smarttransponder ist kein notwendiger Bestandteil der Meßvorrichtung. Die Vorverarbeitung der Meßsignale und das Generieren eines amplitudenmodulierten Signals (drahtlose Übertragung) kann genauso mit Hilfe anderer Bausteine, z.B. einem geeigneten Mikrocontroller geschehen.

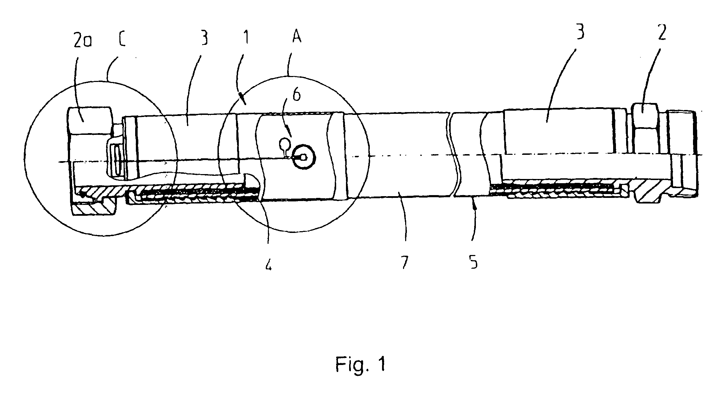

Das Ausführungsbeispiel der Fig. 4 unterscheidet sich nur insofern von dem Ausführungsbeispiel gemäß Fig. 1 bis 3, als der Sensor 8 oder auch verschiedene Sensoren insbesondere zum Messen der Temperatur und der Dehnung von den übrigen Bauteilen der Meßeinheit 1 getrennt an der Schlaucharmatur 17 angeordnet ist. Demgemäß findet eine Beeinflussung der Meßergebnisse durch den Schlauch nicht statt.

## Patentansprüche

1. Vorrichtung zum Messen von Drücken, Temperaturen, Impulsen und Dehnungen in und von Schlauchleitungen während des Betriebes, bei dem die Schlauchleitung (1) mindestens eine Messeinheit (6) besitzt, die mindestens einen Sensor (8) für jeden Messwert, einen Transponder (13) und eine Antenne (10) zum drahtlosen Datenübertragen zu einer externen Auswerteinheit besitzt, **dadurch gekennzeichnet, dass** der Sensor (8) in der Schlaucharmatur (17) angeordnet ist.

2. Vorrichtung nach Anspruch 1, **dadurch gekennzeichnet, daß** die Meßeinheit in oder an der Schlauchwandung angeordnet ist.

3. Vorrichtung nach Anspruch 1, **dadurch gekennzeichnet, daß** ein Sensor (8) zur Temperatur- -und/oder Dehnungsmessung mit der Schlaucharmatur und die weiteren Elemente der Meßeinheit (6) mit dem Schlauch (4) verbunden sind.

4. Vorrichtung nach einem der Ansprüche 1 bis 3, **gekennzeichnet durch** einen Smarttransponder (13).

5. Vorrichtung nach einem der Ansprüche 1 bis 4, **dadurch gekennzeichnet, daß** die Meßeinheit (6) einen besonderen Datenspeicher (14) besitzt.

6. Vorrichtung nach einem der Ansprüche 1 bis 5, **dadurch gekennzeichnet, daß** die Meßeinheit (6) mit mindestens einer Batterie oder einem Akkumulator (9) ausgerüstet ist.

7. Vorrichtung nach einem der Ansprüche 1 bis 6, **dadurch gekennzeichnet, daß** die Meßeinheit (6) mit einem Meßwandler (15) ausgestattet ist.

## Claims

1. Device for measuring pressures, temperatures, pulses and strains in and of hose lines during operation, wherein the hose line (1) has at least one measuring unit (6) which has at least one sensor (8) for each measured value, a transponder (13) and an antenna (10) for wireless data transmission to an external evaluating unit, **characterised in that** the sensor (8) is arranged in the hose fitting (17).

2. Device according to Claim 1, **characterised in that** the measuring unit is arranged in or on the hose wall.

3. Device according to Claim 1, **characterised in that** a sensor (8) for temperature and/or strain measurement is connected to the hose fitting and the further elements of the measuring unit (6) are connected to the hose (4).

4. Device according to any one of Claims 1 to 3, **characterised by** a smart transponder (13).

5. Device according to any one of Claims 1 to 4, **characterised in that** the measuring unit (6) has a specific data memory (14).

6. Device according to any one of Claims 1 to 5, **characterised in that** the measuring unit (6) is equipped with at least one battery or an accumulator (9).

7. Device according to any one of Claims 1 to 6, **characterised in that** the measuring unit (6) is equipped with a transducer (15).

## Revendications

1. Dispositif pour mesurer des pressions, des températures, des impulsions et des dilatations dans et sur des tuyaux flexibles pendant le fonctionnement, dans lequel le tuyau flexible (1) possède au moins une unité de mesure (6) qui possède au moins un capteur (8) pour chaque valeur de mesure, un transpondeur (13) et une antenne (10) pour des transmissions de données sans fil vers une unité d'évaluation externe, **caractérisé par le fait que** le capteur (8) est disposé dans l'embout de tuyau (17).

2. Dispositif selon la revendication 1, **caractérisé par le fait que** l'unité de mesure est disposée dans ou sur la paroi de tuyau.

3. Dispositif selon la revendication 1, **caractérisé par le fait qu'**un capteur (8) pour la mesure de température et/ou de dilatation est relié à l'embout de tuyau et les autres éléments de l'unité de mesure (6) sont reliés au tuyau (4).

4. Dispositif selon l'une des revendications 1 à 3, **caractérisé par** un transpondeur intelligent (13).

5. Dispositif selon l'une des revendications 1 à 4, **caractérisé par le fait que** l'unité de mesure (6) possède une mémoire de données (14) particulière.

6. Dispositif selon l'une des revendications 1 à 5, **caractérisé par le fait que** l'unité de mesure (6) est équipée d'au moins une pile ou un accumulateur (9).

7. Dispositif selon l'une des revendications 1 à 6, **caractérisé par le fait que** l'unité de mesure (6) est équipée d'un transducteur (15).
